# EUROPEAN PATENT APPLICATION

(11) **EP 4 718 835 A1**
(43) Date of publication of application: **01.04.2026**
(21) Application number: 24810738.5
(22) Date of filing: 08.04.2024
(51) Int. Cl.: H04N 5/76, G11B 20/10, H04N 5/92

(54) **RECORDING METHOD, STORAGE CONTROL DEVICE, INFORMATION PROCESSING DEVICE, AND VIDEO RECORDING SYSTEM**

(30) Priority: 23.05.2023 JP 2023084966
(71) Applicant: Panasonic Intellectual Property Management Co., Ltd., Kadoma-shi, Osaka 571-0057 (JP)
(72) Inventor: YAMASHITA Hideaki, Kadoma-shi, Osaka 571-0057 (JP)
(74) Representative: Novagraaf International SA
(86) International application number: PCT/JP2024/014229
(87) International publication number: WO 2024/241730

(57) **Abstract**

A recording method for recording video data in a plurality of recording areas having different performances, includes: a usage status acquisition step of acquiring a usage status of the video data obtained by analyzing the video data; and a recording area determining step of determining in which recording area of the plurality of recording areas the video data is to be recorded, based on the usage status.

## Description

### TECHNICAL FIELD

The present disclosure relates to a recording method for recording video data in a predetermined recording area, a storage control device, an information processing device, and a video recording system.

### BACKGROUND ART

There is known a system that inputs video data output from a video output device such as a camera and records the video data in a storage. The video data recorded in the storage is used for, for example, future reproduction or video editing.

In addition, it is known that data such as the video data is recorded in a plurality of storages and a plurality of recording areas formed in the storages. For example, a system including a plurality of storages having different performances (for example, access rate) is known. Since capacity of each storage is limited, in this system, data to be recorded in each storage is selected. As a method of selecting the data to be recorded in the storage, for example, it is known to reduce an amount of data to be collected in a case where a total rate of data collected in an IoT system exceeds a throughput parameter of a network infrastructure (see, for example, PTL 1).

### Citation List

### Patent Literature

PTL 1: International Publication No. 2019/028269

### SUMMARY OF THE INVENTION

As described above, the video data recorded in the video recording system is used for future reproduction or video editing. Some video data is frequently reproduced and edited, and some video data is not immediately used for reproduction or editing, but needs to be stored for a long period of time. In the system including a plurality of storages having different performances, it is desirable to record such video data in an appropriate storage. In addition, also in a case where the plurality of recording areas are formed in one storage, it is desirable to record the video data in an appropriate recording area.

An object of the present disclosure is to record the video data in an appropriate recording area when the video data is recorded in a plurality of recording areas having different performances.

The recording method for recording the video data according to the present disclosure is a method for recording the video data in a plurality of recording areas having different performances. The recording method includes the following step.
- a usage status acquisition step of acquiring a usage status of the video data obtained by analyzing the video data.
- a recording area determining step of determining in which recording area of the plurality of recording areas the video data is to be recorded, based on the usage status.

In the recording method for recording the video data according to the present disclosure, the video data is analyzed to determine the usage status of the video data, and it is determined in which recording area of the plurality of recording areas the video data is to be recorded, based on the determination result (that is, the usage status of the video data). This makes it possible to record the video data in an appropriate recording area according to the usage status.

### BRIEF DESCRIPTION OF THE DRAWINGS

Fig. 1 is a diagram illustrating a configuration of a video recording system.
Fig. 2 is a diagram illustrating a configuration of an information processing device.
Fig. 3 is a diagram illustrating a configuration of a storage control device.
Fig. 4 is a flowchart illustrating an operation of the information processing device in a video data recording operation based on an importance.
Fig. 5 is a flowchart illustrating an operation of the storage control device in the video data recording operation based on the importance.
Fig. 6 is a diagram illustrating transmission and reception of signals in the video data recording operation based on the importance of the video data.
Fig. 7 is a flowchart illustrating the operation of the information processing device in another example of the video data recording operation based on the importance.
Fig. 8 is a flowchart illustrating an operation of the storage control device in another example of the video data recording operation based on the importance.
Fig. 9 is a diagram illustrating transmission and reception of signals in another example of the video data recording operation based on the importance.
Fig. 10 is a diagram illustrating an example of a data transfer time setting table.
Fig. 11 is a flowchart illustrating the video data recording operation based on a data transfer time.
Fig. 12 is a flowchart illustrating the video data recording operation based on an access frequency.
Fig. 13 is a diagram illustrating an example of a write state of each erase block.
Fig. 14 is a flowchart illustrating another example of the video data recording operation based on the access frequency.

### DESCRIPTION OF EMBODIMENT

Hereinafter, exemplary embodiments will be described in detail with reference to the drawings as appropriate. However, unnecessarily detailed description may be omitted. For example, a detailed description of an already well-known matter and a duplicated description of substantially the same configuration may be omitted. This is to avoid unnecessary redundancy of the following description and to facilitate understanding of those skilled in the art. Note that the inventor provides the accompanying drawings and the following description in order for those skilled in the art to fully understand the present disclosure, and does not intend to limit the subject matter described in the claims by them.

In the present disclosure, "video data" means data including moving video data, sound data, and metadata, data including only moving video data, and data including still video data.

### [1. Video recording system]

Hereinafter, a video recording system 100 of the present disclosure will be described with reference to the drawings. The video recording system 100 is a system for recording video data input from a video output device 2 to be described later in any of a plurality of storages. The video data recorded in the storage is used for, for example, future reproduction or editing. The editing of the video data includes, for example, generating new video data by inserting a specific portion of other video data into the video data.

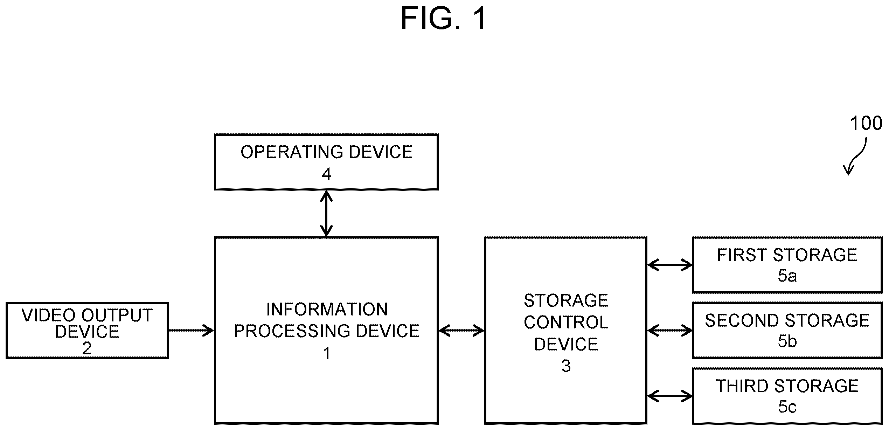

A configuration of the video recording system 100 will be described below with reference to Fig. 1. Fig. 1 is a diagram illustrating the configuration of the video recording system 100. The video recording system 100 includes an information processing device 1, a storage control device 3, and a plurality of storages 5a to 5c.

The information processing device 1 is connected to the video output device 2. The video output device 2 is a device that acquires video and sound data, converts them into an electrical signal, and outputs the electrical signal to an outside. The video output device 2 is, for example, a video imaging device including a camera that shoots a predetermined video, a microphone that acquires a sound of the predetermined video, and the like. In addition, the video output device 2 may be a media server in which a large number of videos are recorded. The video output from the video output device 2 is, for example, a high quality video such as a 4K video in an uncompressed format. Note that, in an example illustrated in Fig. 1, only one video output device 2 is provided, but the present invention is not limited thereto. The video recording system 100 may include a plurality of the video output devices 2.

The information processing device 1 executes various types of information processing related to the video data input from the video output device 2. Specifically, the information processing device 1 can execute conversion of the video data into data in a compressed format.

The information processing device 1 is connected to an operating device 4. The operating device 4 is a device that performs an operation for editing the video data. The operating device 4 includes, for example, an input device (for example, a keyboard, a mouse, an operation panel, and the like) that performs an operation related to the editing of the video data, and a display device (for example, a display) that displays the video data. The information processing device 1 outputs the video data to the operating device 4 to display the video data, and accepts an operation of the operating device 4 to edit the video data. Specifically, for example, the information processing device 1 can generate new video data by inserting a specific portion of past videos stored in the storages 5a to 5c into the video input from the video output device 2.

The information processing device 1 analyzes the video data and determines a usage status of the video data in the video recording system 100. Specifically, the information processing device 1 analyzes images and/or sounds included in the video data, and determines an importance of the video data based on an analysis result. The importance of the video data is high when contents of the video data are important, for example, when the video data includes a climax scene. On the other hand, when the video data includes contents that are not important, the importance of the video data is low. The information processing device 1 analyzes the video data by image recognition and sound recognition using artificial intelligence.

In addition, the information processing device 1 analyzes an access status of the video data and determines an access frequency to the video data. The access frequency to the video data can be determined by, for example, analyzing an access log in which access to the data is recorded.

The information processing device 1 associates the importance of the video data and/or the access frequency to the video data with the video data as metadata of the video data. The metadata is data in which various kinds of information related to the video data are recorded. In addition to the importance of the video data and the access frequency to the video data, use process information of the video data can be recorded in the metadata. The use process information is, for example, information related to recording, editing, sending, and/or reuse of the video data.

The information processing device 1 is connected to the storage control device 3. The information processing device 1 instructs the storage control device 3 to record the video data input from the video output device 2, the video data converted into the compressed format, the edited video data, and the like in any of the plurality of storages 5a to 5c. In addition, the information processing device 1 instructs the storage control device 3 to read specific video data from any of the plurality of storages 5a to 5c.

The storage control device 3 performs control to read the video data from any of the plurality of storages 5a to 5c and control to record the video data in any of the plurality of storages 5a to 5c. The storage control device 3 reads the video data instructed to be read from the information processing device 1 from any of the plurality of storages 5a to 5c.

The storage control device 3 records the video data received from the information processing device 1 in any of the plurality of storages 5a to 5c according to an instruction from the information processing device 1. Specifically, the storage control device 3 grasps the usage status of the video data from the metadata associated with the video data, and determines in which of the plurality of storages 5a to 5c the video data is to be recorded based on the grasped usage status. The storage control device 3 records the video data in the storages 5a to 5c determined to record the video data therein.

The plurality of storages 5a to 5c read designated video data according to an instruction from the storage control device 3. In addition, the plurality of storages 5a to 5c record the video data received from the storage control device 3 according to an instruction from the storage control device 3. In the present disclosure, the plurality of storages 5a to 5c includes a first storage 5a, a second storage 5b, and a third storage 5c.

The first storage 5a, the second storage 5b, and the third storage 5c have different performances. Specifically, the first storage 5a is a fastest storage among the above storages. The first storage 5a is, for example, an enterprise solid state drive such as a triple level cell (TLC) solid state drive (SSD).

The second storage 5b is slower than the first storage 5a, but is faster than the third storage 5c. Specifically, the second storage 5b is, for example, a relatively high-speed storage such as a quad-level cell (QLC) solid state drive or a hard disk (HDD).

The third storage 5c is the slowest storage among the above storages. The third storage 5c is, for example, an optical disk drive that writes data to an optical disk and reads data from the optical disk, or a magnetic tape drive that writes data to a magnetic tape and reads data from the magnetic tape.

By recording the video data in the plurality of storages 5a to 5c having different performances as described above, it is possible to realize the recording of the video data according to the usage status, use, and the like of the video data.

Specifically, the first storage 5a having a highest speed can record, for example, video data to be recorded/reproduced in real time or important video data having a high access frequency, such as data used for editing. The second storage 5b can record, for example, video data that is not used immediately but may be used in future, such as secondary use and reuse. The third storage 5c can record, for example, video data that is not used immediately but is stored for a long period of time for the purpose of archiving or the like.

When determining that the importance of the video data is high from contents of the metadata of the video data, the storage control device 3 determines to record the video data in the first storage 5a. On the other hand, when determining that the importance of the video data is low, the storage control device 3 determines in which of the second storage 5b and the third storage 5c the video data is to be recorded according to the importance of the video data.

Although only one first storage 5a, one second storage 5b, and one third storage 5c exist in Fig. 1, each of the first storage 5a, the second storage 5b, and the third storage 5c may include a plurality of storages.

### [2. Information processing device]

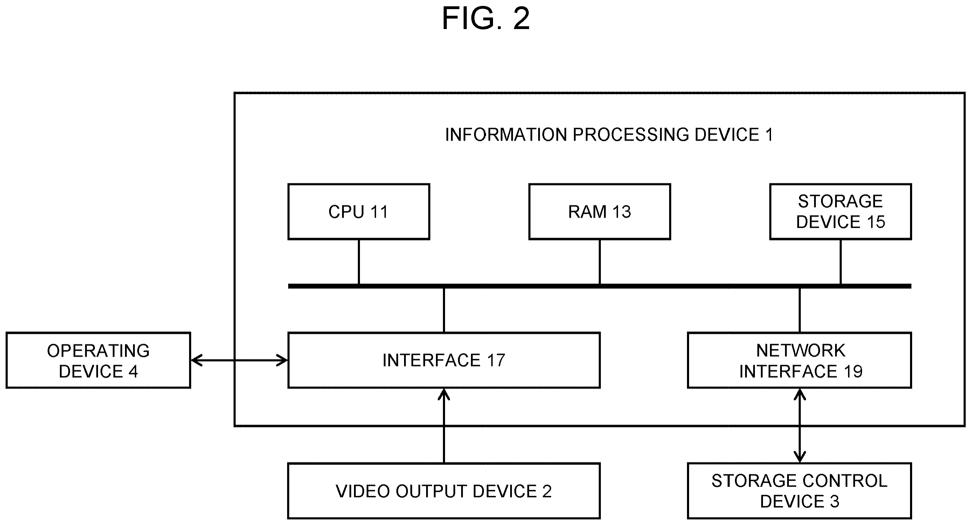

A configuration of the information processing device 1 will be described with reference to Fig. 2. Fig. 2 is a diagram illustrating the configuration of the information processing device 1. The information processing device 1 includes a CPU 11, a RAM 13, a storage device 15, an interface 17, and a network interface 19.

The CPU 11 executes various processing in the information processing device 1. Specifically, the CPU 11 executes information processing such as compression of the video data, information processing related to the editing of the video data, and analysis processing of the video data. The CPU 11 executes the above processing by executing a command indicated in a program stored in the storage device 15. Note that part of the processing in the information processing device 1 may be realized by hardware mounted on the CPU 11. The CPU 11 generates instructions for executing various processing.

The RAM 13 is a storage area for temporarily storing the instructions, the video data, and the like generated by the CPU 11. The storage device 15 includes a ROM, a hard disk drive (HDD), a solid state drive (SSD), or the like. The storage device 15 stores a program executed by the CPU 11, settings related to information processing executed by the information processing device 1, parameters used for the information processing, and the like.

The interface 17 connects the information processing device 1 and another device. As illustrated in Fig. 2, the video output device 2 and the operating device 4 are connected to the interface 17. The interface 17 is, for example, an interface for connecting video-related devices, such as an interface conforming to a serial digital interface (SDI) standard.

The network interface 19 connects the information processing device 1 and another device via a network such as a WAN or a LAN. As illustrated in Fig. 2, the storage control device 3 is connected to the network interface 19.

The network interface 19 can directly transmit and receive data and the like between the RAM 13 of the information processing device 1 and a RAM (RAM 33 of the storage control device 3) of another device by remote direct memory access (RDMA). This makes it possible to transmit and receive data between the information processing device 1 and another device at a high speed. The network interface 19 is, for example, a Gigabit Ethernet (registered trademark) interface.

Note that, in the information processing device 1, the video output device 2 and the operating device 4 may be connected to the network interface 19 instead of the interface 17. In this case, for example, transmission conforming to the ST2110 standard of the SMPTE standardization organization can be used.

In the information processing device 1, the CPU 11, the RAM 13, the interface 17, and the network interface 19 constitute a control unit of the information processing device 1. Further, the storage device 15 constitutes a storage unit of the information processing device 1.

### [3. Storage control device]

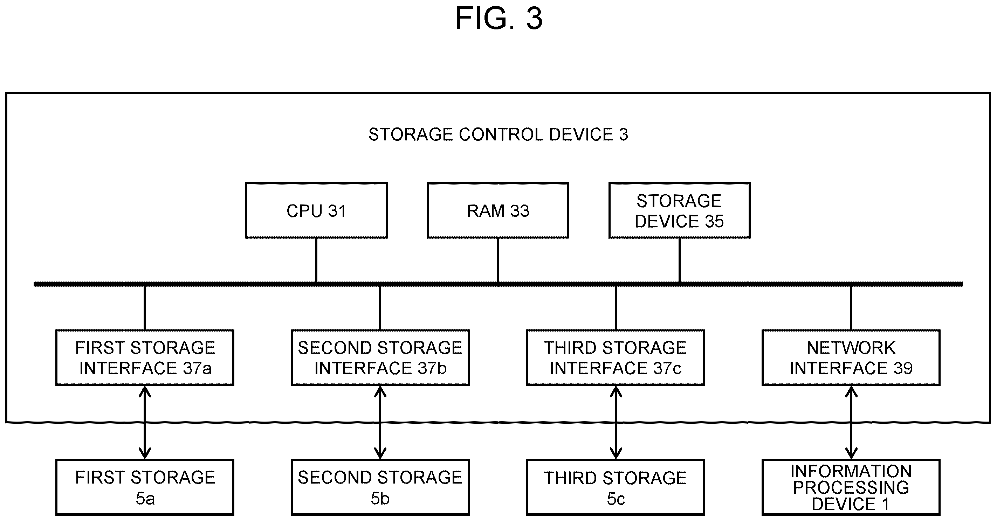

A configuration of the storage control device 3 will be described with reference to Fig. 3. Fig. 3 is a diagram illustrating the configuration of the storage control device 3. The storage control device 3 includes a CPU 31, a RAM 33, a storage device 35, a first storage interface 37a to a third storage interface 37c, and a network interface 39.

The CPU 31 executes various processing in the storage control device 3. The CPU 31 grasps the usage status from the metadata of the video data, determines in which of the plurality of storages 5a to 5c the video data is to be recorded based on the grasped usage status, and executes the recording of the video data in the determined storage. The CPU 31 executes various processing in the storage control device 3 by executing a command indicated in a program stored in the storage device 35. Note that part of the processing in the storage control device 3 may be realized by hardware mounted on the CPU 31.

The RAM 33 temporarily stores data and the like. The RAM 13 temporarily stores an instruction for the storage, data transmitted and received between the information processing device 1 and the storage, and the like.

The storage device 35 includes a ROM, a hard disk drive (HDD), a solid state drive (SSD), or the like. The storage device 35 stores a program executed by the CPU 31, settings related to information processing in the storage control device 3, parameters used for the information processing, and the like.

The first storage interface 37a connects the storage control device 3 and the first storage 5a. The first storage interface 37a is, for example, a PCIe interface conforming to the PCI express standard of the PCI-SIG standard. Thus, the storage control device 3 and the first storage 5a can transmit and receive data and the like at a high speed by a protocol (non-volatile memory express (NVMe)) dedicated to a nonvolatile memory using a PCI-Express bus. In the NVMe, a controller acquires data of a NAND memory using a NAND protocol, replaces the data with a PCIe protocol to transfer the data toward a host. In this regard, in the case of conventional Serial-ATA (SATA), the DMA controller that directly transfers data toward the host converts data from the NAND memory to the SATA protocol, acquires the data, and further replaces the data with the PCIe protocol to transfer the data to the host. That is, since processing of the NVMe involves direct conversion from the NAND protocol to the PCIe protocol, data transfer processing speed is high.

The second storage interface 37b connects the storage control device 3 and the second storage 5b. The second storage interface 37b is, for example, the PCIe interface or the SATA (Serial-ATA) interface described above.

The third storage interface 37c connects the storage control device 3 and the third storage 5c. The third storage interface 37c is, for example, the SATA (Serial-ATA) interface, a USB (Universal Serial Bus) interface, or the like.

The network interface 39 connects the storage control device 3 and another device via a network such as a WAN or a LAN. As illustrated in Fig. 3, the information processing device 1 is connected to the network interface 39. The network interface 39 directly transmits and receives data and the like between the RAM 33 of the storage control device 3 and the RAM (RAM 13 of the information processing device 1) of another device by RDMA. In addition, the network interface 39 can transmit and receive data to and from another device at a high speed by a protocol (NVMe-oF (NVMe over Fabric)) for communication via a network dedicated to a solid state drive. The network interface 39 is, for example, the Gigabit Ethernet (registered trademark) interface.

In the storage control device 3, the CPU31, the RAM33, the first storage interface 37a to the third storage interface 37c, and the network interface 39 constitute a control unit of the storage control device 3. Further, the storage device 35 constitutes a storage unit of the storage control device 3.

### [4. Operation of video recording system]

### [4-1. Overview]

Hereinafter, an operation of the video recording system 100 will be described. The video recording system 100 determines in which of the plurality of recording areas the video data is to be recorded based on the usage status of the video data input from the video output device 2. The "usage status" as a reference for determining the recording area of the video data includes the importance of the video data, a data transfer time of the video data, and the access frequency.

Note that the "recording area" in the present disclosure means a data recording area formed in the first storage 5a to the third storage 5c, or in a recording medium on which data is written by these storages.

### [4-2. video data recording operation based on importance (part 1)]

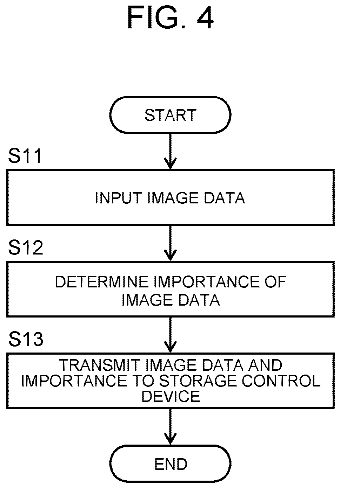

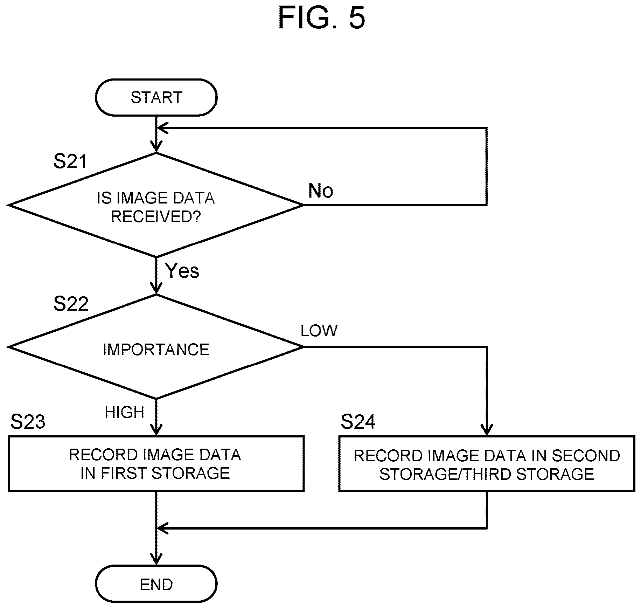

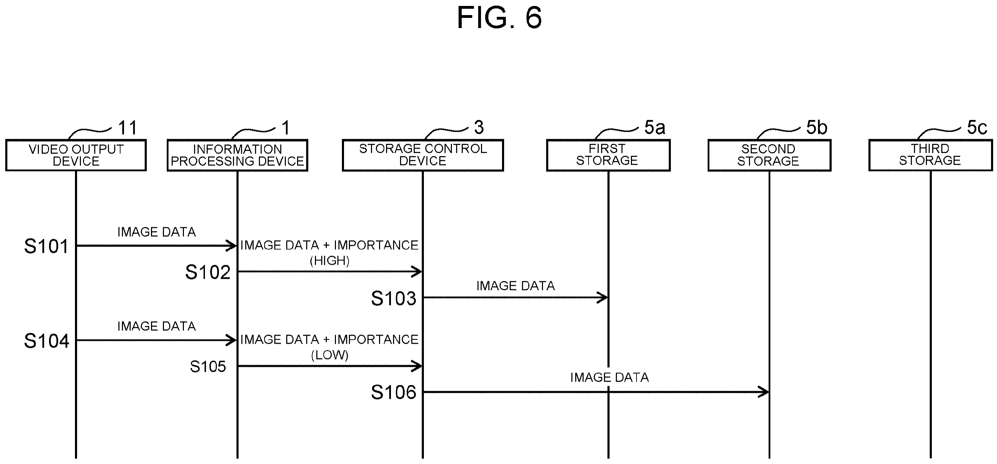

First, a video data recording operation based on the importance will be described with reference to Figs. 4 to 6. Fig. 4 is a flowchart illustrating an operation of the information processing device 1 in the video data recording operation based on the importance. Fig. 5 is a flowchart illustrating an operation of the storage control device 3 in the video data recording operation based on the importance. Fig. 6 is a diagram illustrating transmission and reception of signals in the video data recording operation based on the importance of the video data.

When the video data is output from the video output device 2, the CPU 11 of the information processing device 1 receives the video data and records the video data in the RAM 13 or the storage device 15 of the information processing device 1 (step S11 in Fig. 4, and steps S101 and S104 in Fig. 6).

Subsequently, the CPU 11 analyzes the contents of the received video data and determines the importance of the video data (step S12 in Fig. 1). The CPU 11 determines the importance of the contents of the video data by, for example, image analysis (for example, image recognition) and/or voice analysis (for example, voice recognition) of the video data using artificial intelligence. For example, as a result of the image analysis and/or the voice analysis, when it is determined that the video data includes a video that is the climax scene, it is determined that the importance of the video data is high. On the other hand, as the result of the image analysis and/or the voice analysis, when the video data does not include a scene that is important as the contents, it is determined that the importance of the video data is low.

The CPU 11 generates an importance parameter indicating the determined importance. The importance parameter may be, for example, a parameter indicating a degree of importance by a numerical value (for example, the higher the importance, the larger the numerical value), or may be a parameter indicating only a level of importance of the contents. Thereafter, the CPU 11 associates the importance with the video data as the metadata by recording the importance parameter in the metadata of the video data.

After the importance parameter is recorded in the metadata of the video data, the CPU 11 transmits the video data to the storage control device 3 (step S13 in Fig. 4, and steps S102 and S105 in Fig. 6).

If the storage control device 3 receives the video data ("Yes" in step S21 in Fig. 5), the CPU 31 of the storage control device 3 extracts the importance parameter from the metadata of the received video data. Thereafter, the CPU 31 determines the importance of the received video data from the extracted importance parameter (step S22 in Fig. 5). Note that if the video data is not received ("No" in step S21 in Fig. 5), the storage control device 3 waits until receiving the video data, for example, while executing other processing.

If the importance of the received video data is high ("high" in step S22 in Fig. 5), the CPU 31 determines to record the received video data in a high-performance first storage 5a (a first recording area), and records the video data in the first storage 5a (step S23 in Fig. 5 and step S103 in Fig. 6).

On the other hand, if the importance of the received video data is low ("low" in step S22 in Fig. 5), the CPU 31 determines to record the received video data in the second storage 5b or the third storage 5c (a second recording area) having lower performance than the first storage 5a, and records the video data in the determined storage (step S24 in Fig. 5 and step S106 in Fig. 6).

Which one of the second storage 5b and the third storage 5c the video data with low importance is recorded can be determined by, for example, the degree of importance, the use of the video data to be recorded (for example, whether there is a possibility of secondary use or the like, whether it is used as an archive, or the like), and the like.

As described above, by determining in which of the plurality of storages (the first storage 5a to the third storage 5c) the video data is to be recorded based on the importance of the contents of the video data, the video data can be recorded in an appropriate storage according to the importance.

For example, high importance of the video data indicates that the video data is often used for reproduction or editing. By recording such video data in the high-performance (high-speed) first storage 5a, the video data can be efficiently used. For example, the video data can be smoothly reproduced without delay. In addition, since the video data to be edited can be read at high speed and the edited video data can be recorded at high speed, efficiency of editing work of the video data is improved.

### [4-3. video data recording operation based on importance (part 2)]

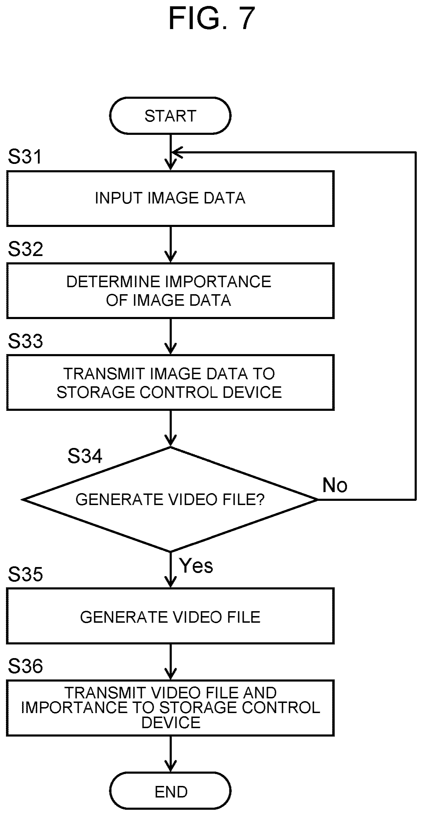

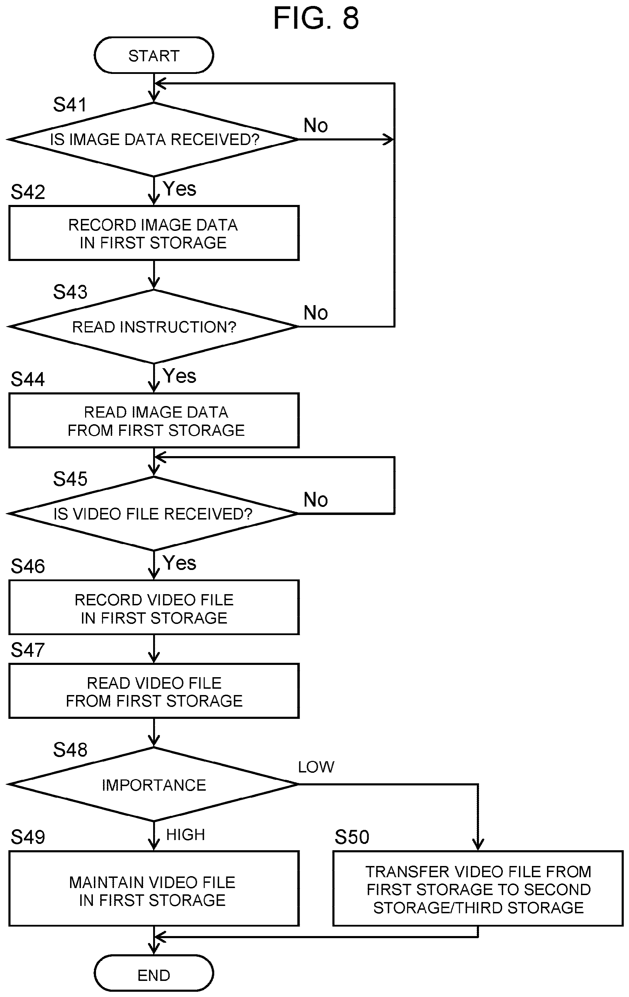

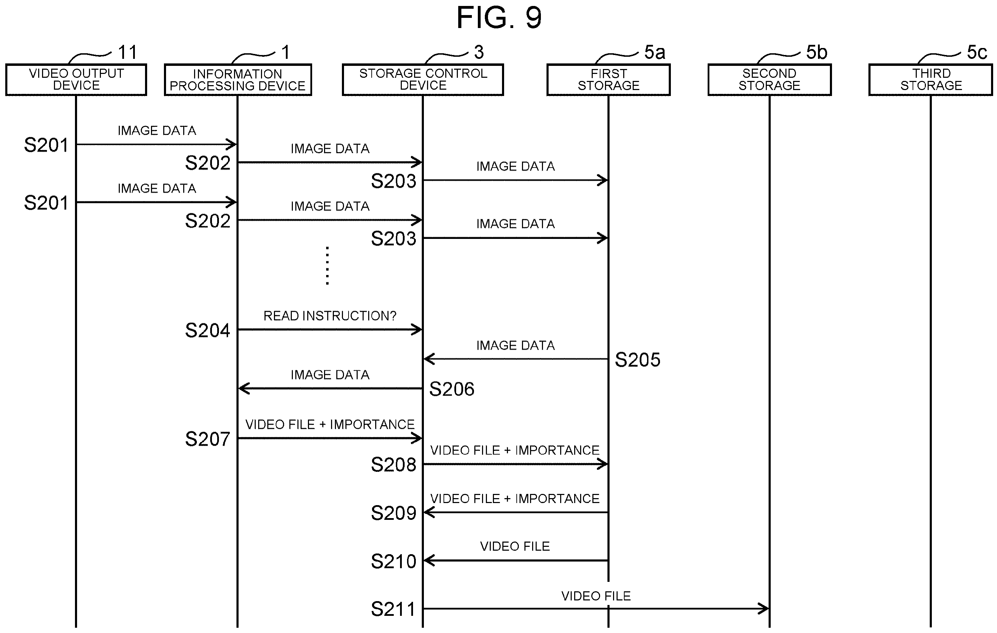

Next, another example of the video data recording operation based on the importance will be described with reference to Figs. 7 to 9. Fig. 7 is a flowchart illustrating the operation of the information processing device 1 in another example of the video data recording operation based on the importance. Fig. 8 is a flowchart illustrating the operation of the storage control device 3 in another example of the video data recording operation based on the importance. Fig. 9 is a diagram illustrating transmission and reception of signals in another example of the video data recording operation based on the importance. In this operation example, the video data output from the video output device 2 is sequentially recorded, a video file is generated from a plurality of recorded video data, and then, to which storage the video file is transferred is decided based on the importance.

When the video data is output from the video output device 2, the CPU 11 of the information processing device 1 receives the video data and records the video data in the RAM 13 or the storage device 15 of the information processing device 1 (step S31 in Fig. 7 and step S201 in Fig. 9).

Subsequently, the CPU 11 analyzes the contents of the received video data and determines the importance of the video data (step S32 in Fig. 7). Thereafter, the CPU 11 generates the importance parameter indicating the determined importance, and records the importance parameter in the metadata of the video data to associate the importance with the video data as the metadata.

Thereafter, the CPU 11 transmits the video data to the storage control device 3 (step S33 in Fig. 7 and step S202 in Fig. 9). Steps S31 to S33 and steps S201 and S202 described above are executed every time the video data is output from the video output device 2 until a video file generation operation described later is performed (during "No" in step S34).

If the storage control device 3 receives the video data ("Yes" in step S41 in Fig. 8), the CPU 31 of the storage control device 3 records the received video data in the first storage 5a (step S42 in Fig. 8 and step S203 in Fig. 9). Steps S41 and S42 and step S203 described above are executed every time the video data is received from the information processing device 1 until a read instruction for the video data recorded so far is received from the information processing device 1 (during "No" in step S43 in Fig. 8).

While the video data is sequentially recorded, the CPU 11 of the information processing device 1 determines whether to generate the video file by using the plurality of video data recorded in the first storage 5a (step S34 in Fig. 7). The CPU 11 determines to generate the video file, for example, when an operation of instructing to stop the recording of the video data is performed in the information processing device 1 or the operating device 4. Further, the CPU 11 determines to generate the video file, for example, when a specified time has elapsed since start of the recording of the video data.

When determining to generate the video file ("Yes" in step S34 in Fig. 7), the CPU 11 of the information processing device 1 generates the video file (step S35 in Fig. 7). Specifically, the following steps are executed to generate the video file. First, the CPU 11 transmits a read instruction for reading the plurality of video data recorded so far from the first storage 5a to the storage control device 3 (step S204 in Fig. 9). This instruction includes, for example, information of the video data recorded so far (for example, a file name or the like).

When the read instruction is received ("Yes" in step S43 in Fig. 8), the CPU 31 of the storage control device 3 reads the plurality of video data recorded so far from the first storage 5a (step S44 in Fig. 8 and step S205 in Fig. 9). The CPU 31 transmits the read video data to the information processing device 1 (step S206 in Fig. 9).

When the plurality of video data for generating the video file is received, the CPU 11 of information processing device 1 generates the video file using the received plurality of video data (step S35 in Fig. 7). Specifically, the CPU 11 combines the plurality of received video data, and adds predetermined information (header, footer, metadata, and the like) to data obtained by combining the video data, to generate the video file.

After generating the video file, the CPU 11 determines the importance of the video file. The importance of the video file can be determined, for example, by analyzing the contents of the video file. In addition, for example, in a case where the importance of any of the plurality of video data constituting the video file is high, it may be determined that the importance of the video file is high. Alternatively, the level of importance of the video file may be determined based on the number of importances of the plurality of video data constituting the video file.

After determining the importance of the video file, the CPU 11 generates the importance parameter indicating the importance and records the parameter in the metadata of the video file. Thus, the importance of the video file is associated with the video file as the metadata.

After generating the video file, the CPU 11 transmits the video file in which the importance parameter is recorded in the metadata to the storage control device 3 (step S36 in Fig. 7 and step S207 in Fig. 9). At this time, the CPU 11 instructs the storage control device 3 to record the generated video file in the first storage 5a.

If the video file is received ("Yes" in step S45 in Fig. 8), the CPU 31 of the storage control device 3 records the received video file in the first storage 5a (step S46 in Fig. 8 and step S208 in Fig. 9). Note that after transmitting the plurality of video data to the information processing device 1, the storage control device 3 waits until receiving the video file (during "No" in step S45 in Fig. 8), for example, while executing other processing.

After the video file is recorded in the first storage 5a, the CPU 31 of the storage control device 3 reads the video file recorded in the first storage 5a in order to determine the importance of the video file (step S47 in Fig. 8 and Step S209 in Fig. 9).

Thereafter, the CPU 31 extracts the importance parameter from the metadata of the read video file. Thereafter, the CPU 31 determines the importance of the video file from the extracted importance parameter (step S48 in Fig. 8).

If the importance of the video file is high ("high" in step S48 in Fig. 8), the CPU 31 determines to maintain the video file as recorded in the high-performance first storage 5a (first recording area) (step S49 in Fig. 8).

On the other hand, if the importance of the video file is low ("low" in step S48 in Fig. 8), the CPU 31 determines to transfer the video file from the first storage 5a to the second storage 5b or the third storage 5c (the second recording area), and transfers the video file from the first storage 5a to the determined storage (step S50 in Fig. 8 and steps S210 and S211 in Fig. 9). Which one of the second storage 5b and the third storage 5c the video file with low importance is recorded can be determined by, for example, the degree of importance, the use of the video file to be recorded, and the like.

As described above, the video file is generated from the plurality of video data, and it is determined in which of the plurality of storages (the first storage 5a to the third storage 5c) the video file is to be recorded based on the importance of the video file, so that the plurality of video data can be collectively recorded in an appropriate storage according to the importance. In Fig. 8, for convenience of explanation, processing of steps S41 to S44 and processing of step S45 and subsequent steps are described in series, but in actual operation, reading and receiving of video data are performed in parallel.

### [4-4. video data recording operation based on data transfer time]

The video data recording operation based on the data transfer time will be described below. In the video data recording operation based on the data transfer time, when a current time reaches the data transfer time, the video data to be transferred is transferred from a transfer source storage (that is, a storage in which the video data is currently recorded) to a transfer destination storage.

The data transfer time is determined based on the usage status of the video data to be transferred. For example, the data transfer time can be determined based on a use period of the video data, a date and time when the use of the video data is to be stopped, a date and time when the video data is to be reused, and the like.

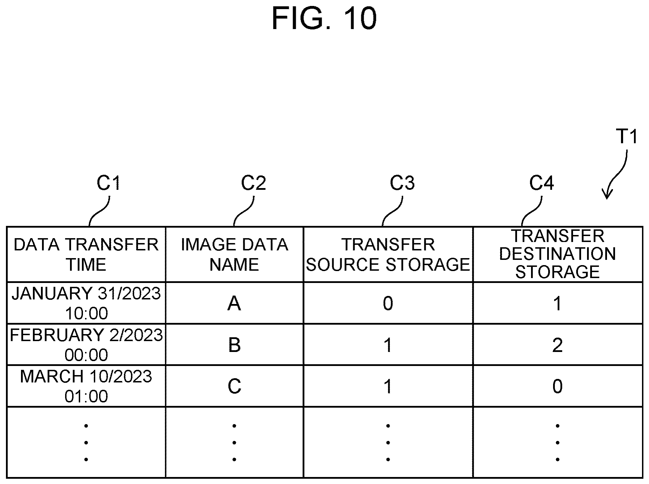

The video data recording operation based on the data transfer time is performed in the storage control device 3. Therefore, the storage device 35 of the storage control device 3 stores the data transfer time. Specifically, the data transfer time is stored in the storage device 35 in association with other information necessary for transferring the video data in a data transfer time setting table T1 as illustrated in Fig. 10. Fig. 10 is a diagram illustrating an example of the data transfer time setting table T1. The data transfer time setting table T1 includes a data transfer time setting column C1, a transfer target data name setting column C2, a transfer source storage setting column C3, and a transfer destination storage setting column C4.

The data transfer time setting column C1 stores the data transfer time at which the video data is transferred. The transfer target data name setting column C2 stores a video data name (for example, the file name) of the video data to be transferred at the data transfer time set in the data transfer time setting column C1.

The transfer source storage setting column C3 stores identification information of the transfer source storage in which the video data to be transferred is currently recorded. The transfer destination storage setting column C4 stores identification information of the transfer destination storage to which the video data to be transferred is transferred. For example, in the transfer source storage setting column C3 and the transfer destination storage setting column C4 illustrated in Fig. 10, "0" indicates the first storage 5a, "1" indicates the second storage 5b, and "2" indicates the third storage 5c.

The data transfer time setting table T1 of Fig. 10 indicates that the video data named "A" recorded in the first storage 5a is transferred from the first storage 5a to the second storage 5b at 10:00 on January 31, 2023, the video data named "B" recorded in the second storage 5b is transferred from the second storage 5b to the third storage 5c at 0:00 on February 2, 2023, and the video data named "C" recorded in the second storage 5b is transferred from the second storage 5b to the first storage 5a at 1:00 on March 10, 2023.

In the above description, the video data named "A" is transferred from the first storage 5a to the second storage 5b because, for example, possibility of high-frequency reproduction, editing, or the like is reduced. The video data named "B" is transferred from the second storage 5b to the third storage 5c, for example, in order to be archived and stored for a long period of time. The video data named "C" is transferred from the second storage 5b to the first storage 5a, for example, in order to be reused for reproduction or editing.

The data transfer time setting table T1 as illustrated in Fig. 10 is generated, for example, as follows. First, when recording the video data in any storage, the CPU 11 of the information processing device 1 records, in the metadata of the video data, information for determining the data transfer time such as the use period of the video data, the date and time when the use of the video data is to be stopped, and the date and time when the video data is to be reused.

When the video data is received, the CPU 31 of the storage control device 3 extracts the information for determining the data transfer time from the metadata of the received video data, and determines the data transfer time and the transfer destination storage based on the information. Thereafter, the CPU 31 records the received video data in any storage. In which storage the video data is to be recorded can be determined as described above, for example, based on the importance of the video data.

Thereafter, the CPU 31 stores the determined data transfer time in the data transfer time setting column C1, stores the video data name recorded in the storage in the transfer target data name setting column C2, stores the identification information of the storage in which the video data is recorded as described above in the transfer source storage setting column C3, and stores the identification information of the determined transfer destination storage in the transfer destination storage setting column C4, to generate the data transfer time setting table T1. Thereafter, the CPU 31 stores the generated data transfer time setting table T1 in the storage device 35.

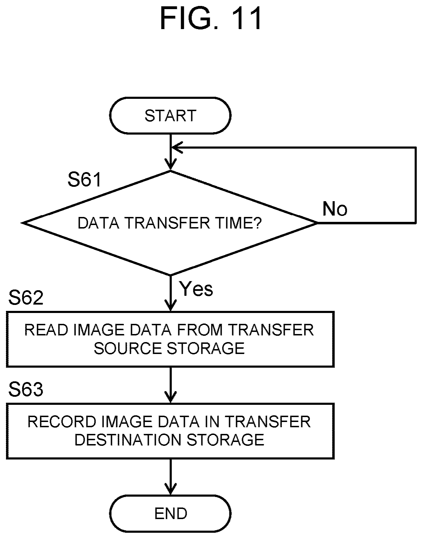

After the data transfer time setting table T1 is generated and stored in the storage device 35 as described above, the video data recording operation based on the data transfer time is performed according to the flowchart illustrated in Fig. 11. Fig. 11 is a flowchart illustrating the video data recording operation based on the data transfer time. The video data recording operation based on the data transfer time is performed in the storage control device 3.

The CPU 31 of the storage control device 3 determines whether the current time coincides with any one of data transfer times stored in the data transfer time setting column C1 of the data transfer time setting table T1 (step S61). If the current time does not coincide with the data transfer time ("No" in step S61), the CPU 31 waits while executing other processing.

If the current time coincides with any of the data transfer times ("Yes" in step S61), the CPU 31 specifies the video data to be transferred from the video data name associated with the data transfer time coincident with the current time in the transfer target data name setting column C2. Further, the transfer source storage is specified from the identification information of the storage associated with the data transfer time coincident with the current time in the transfer source storage setting column C3. Furthermore, the transfer destination storage is specified from the identification information of the storage associated with the data transfer time coincident with the current time in the transfer destination storage setting column C4.

Thereafter, the CPU 31 reads the specified video data to be transferred from the specified transfer source storage (step S62), and records the read video data in the specified transfer destination storage (step S63).

As described above, by transferring the video data from the transfer source storage to the transfer destination storage based on the data transfer time, the video data can be recorded in an appropriate storage according to the usage status of the video data. For example, the video data that is less likely to be reproduced or edited (frequency of reproduction or editing is reduced) can be stored in a storage suitable for long-term data recording (that is, the second storage 5b or the third storage 5c) for secondary use or archiving.

On the other hand, for example, by recording the video data which is frequently reproduced or edited in the high-performance (high-speed) storage (that is, the first storage 5a), it is possible to efficiently reproduce or edit the video data. In addition, a used capacity of the storage can be saved.

### [4-5. video data recording operation based on access frequency (part 1)]

The video data recording operation based on the access frequency will be described below. This recording operation is performed when the first storage 5a is the solid state drive (SSD). The solid state drive uses a semiconductor memory (flash memory) as a data recording medium. A data recording area of the solid state drive includes a plurality of erase blocks. Each erase block includes a plurality of pages. The erase block is a unit of data erasure. The page is a data writing unit.

In the solid state drive, there may be a difference in the number of writes of data between the plurality of erase blocks. This is caused by concentration of data writing in a specific erase block. When the data writing is concentrated on a specific erase block and the number of writes of data to the erase block increases, the erase block reaches an end of life early. When one erase block reaches the end of life, the entire storage is unusable.

In the solid state drive, processing called "wear leveling" is executed so that there is no large difference in the number of writes between the plurality of erase blocks. The wear leveling is processing of smoothing the number of writes between the plurality of erase blocks by transferring data in a predetermined erase block to another erase block. When the wear leveling is executed at the time of data writing/reading, the wear leveling reduces a speed of the data writing/reading. Therefore, it is preferable to suppress occurrence of the wear leveling.

In order to suppress the occurrence of the wear leveling, when the video data is recorded in the first storage 5a that is the solid state drive, it is determined which erase block of the first storage 5a the video data is recorded in consideration of the access frequency of the video data.

The video data recording operation based on the access frequency will be specifically described below. In the following description, it is assumed that there are N erase blocks (N: a positive number of 2 or more) in the first storage 5a. In addition, it is assumed that there are 100 pages that are data writing units in each erase block. An address (for example, a logical block address (LBA)) for accessing the page is assigned to each page.

First, when the video data is received from the video output device 2, the CPU 11 of the information processing device 1 analyzes the received video data and estimates the access frequency of the video data. For example, in a case where it is determined that important contents are included in the video data and are frequently reproduced or edited, it is estimated that the access frequency of the video data increases.

After estimating the access frequency, the CPU 11 generates the access parameter indicating the estimated access frequency. The access parameter may be, for example, a parameter indicating the access frequency by a numerical value, or a parameter indicating only a level of access frequency. The CPU 11 associates the access frequency with the video data as the metadata by recording the access parameter in the metadata of the video data. Thereafter, the CPU 11 transmits the video data associated with the access frequency to the storage control device 3.

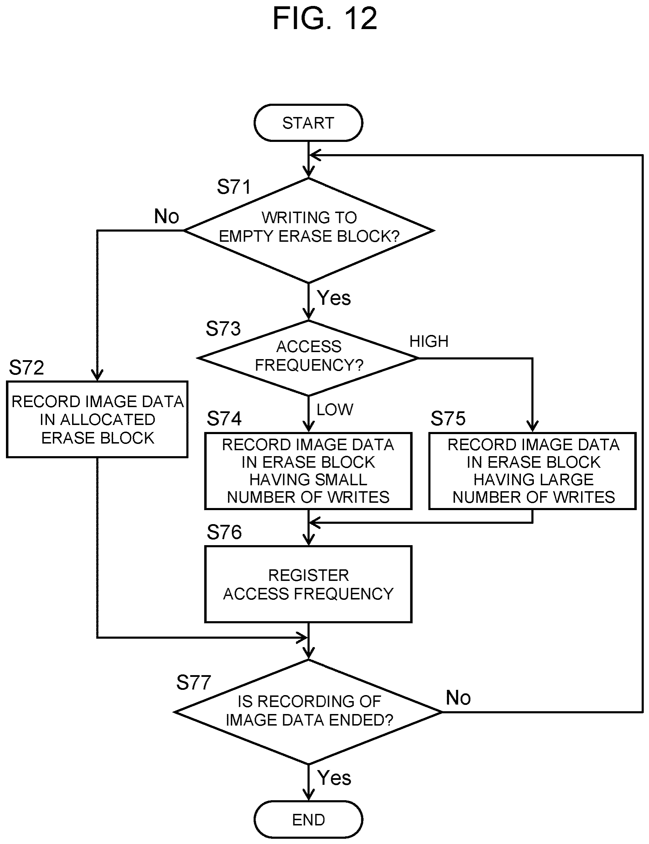

When the video data is received, the storage control device 3 determines in which erase block of the first storage 5a the video data is to be recorded based on the access frequency of the video data, and records the video data in the determined erase block. Specifically, the storage control device 3 records the video data in the first storage 5a according to a flowchart illustrated in Fig. 12. Fig. 12 is the flowchart illustrating the video data recording operation based on the access frequency.

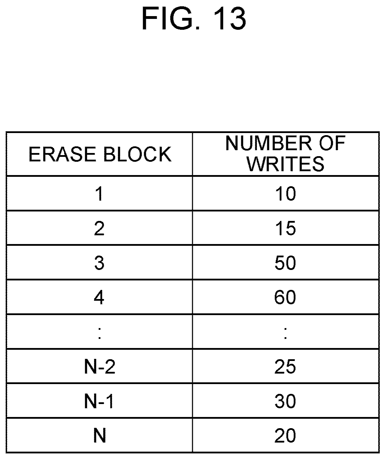

In the following description, it is assumed that the number of writes of each erase block of the first storage 5a is as illustrated in Fig. 13. Fig. 13 is a diagram illustrating an example of a write state of each erase block. It is assumed that the storage control device 3 grasps the number of writes of each erase block of the first storage 5a in advance before writing the video data. This can be achieved, for example, by the storage control device 3 acquiring a state of the first storage 5a at a predetermined cycle.

In addition, it is assumed that the video data is recorded at page addresses 60 to 249 of the first storage 5a. That is, it is assumed that the video data has a size of 190 pages. At which address the video data is to be recorded is determined in the information processing device 1. The address at which the video data is recorded is recorded, for example, in the metadata.

First, the CPU 31 of the storage control device 3 determines whether to record the video data in an empty erase block in which data is not written (step S71). As described above, since a head of the video data is written in the page address 60, at a video data recording start stage, the CPU 31 determines to record the video data in the erase block in which other data is already recorded and the 60th and subsequent pages are empty.

If it is determined that the video data is not to be recorded in the empty erase block ("No" in step S71), the CPU 31 records the video data in the erase block in which other data is already recorded (step S72). In the video data recording start stage, the CPU 31 records a portion from the head to the address 100 of the video data in the erase block in which the 60th and subsequent pages are empty.

On the other hand, if it is determined that the video data is to be recorded in the empty erase block ("Yes" in step S71), it is determined in which of empty erase blocks the video data is to be recorded. In the video data, an empty erase block is determined at start of recording of a portion corresponding to the addresses 101 to 200 and a portion corresponding to the addresses 201 to 249 of the video data.

As described above, the empty erase block in which the video data is to be recorded is determined based on the access frequency of the video data. Therefore, the CPU 31 extracts the access parameter from the metadata of the video data, and determines whether the access frequency of the video data to be recorded is high (step S73).

If the access frequency of the video data is low ("low" in step S73), the CPU 31 determines to record the video data in the erase block (a third recording area) having a small number of writes, and records the video data in the erase block (step S74). When the number of writes is as illustrated in Fig. 13, the CPU 31 determines to record the video data in the erase block "1" with a smallest number of writes.

On the other hand, if the access frequency of the video data is high ("high" in step S73), the CPU 31 determines to record the video data in the erase block (a fourth recording area) having a large number of writes, and records the video data in the erase block (step S75). When the number of writes is as illustrated in Fig. 13, the CPU 31 determines to record the video data in the erase block "4" with a largest number of writes.

When the video data is recorded in the empty erase block, the CPU 31 registers the access frequency of the video data in each page of the erase block in which the video data is recorded (step S76).

After steps S71 to S76 are executed, if the recording of the video data is further continued ("No" in step S77), the above steps S71 to S76 are repeatedly executed. On the other hand, if the recording of the video data is ended ("Yes" in step S77), the video data recording operation based on the access frequency is ended.

As described above, by recording video data having a low access frequency in an erase block having a small number of writes and recording video data having a high access frequency in an erase block having a large number of writes, an increase rate of the number of writes of the erase block having a large number of writes becomes slower than an increase rate of the number of writes of the erase block having a small number of writes, and the difference in the number of writes between these erase blocks decreases with a lapse of time. As a result, the difference in the number of writes between the plurality of erase blocks included in the first storage 5a decreases, and the occurrence of the wear leveling is suppressed in the first storage 5a.

### [4-6. video data recording operation based on access frequency (part 2)]

Hereinafter, another example of the video data recording operation based on the access frequency will be described. As described above, by recording the video data having a low access frequency in the erase block having a small number of writes and recording the video data having a high access frequency in the erase block having a large number of writes, the occurrence of the wear leveling in the first storage 5a can be suppressed. However, for example, as a result of erroneous estimation of the access frequency, video data estimated to have a low access frequency but actually having a high access frequency may be recorded in the erase block having a small number of writes. As a result, the increase rate of the number of writes of the erase block may be slow, a difference from the number of writes of other erase blocks may increase, and the wear leveling may occur.

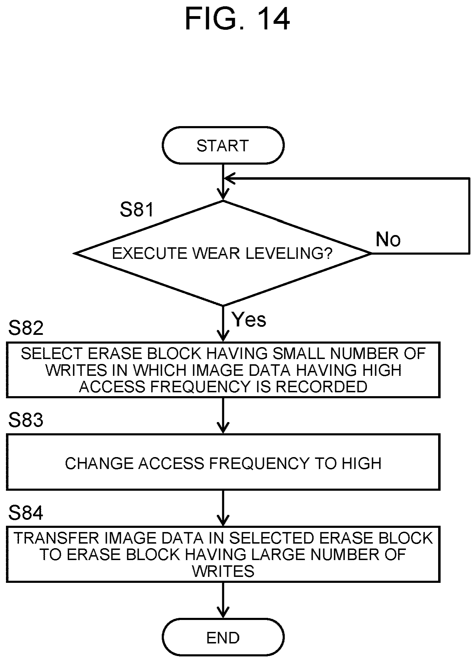

Therefore, in order to suppress the occurrence of further wear leveling, at the time of executing the wear leveling, the video data actually having a high access frequency and recorded in the erase block having a small number of writes is transferred to an erase block having a larger number of writes. Specifically, this recording operation is performed according to the flowchart illustrated in Fig. 14. Note that the recording operation is executed by the storage control device 3. Fig. 14 is a flowchart illustrating another example of the video data recording operation based on the access frequency.

The CPU 31 of the storage control device 3 determines whether to execute the wear leveling (step S81). When the difference in the number of writes between the plurality of erase blocks of the first storage 5a exceeds a predetermined threshold, it is determined to execute wear leveling. If determining not to execute the wear leveling ("No" in step S81), the CPU 31 waits while executing other processing.

On the other hand, if determining to execute the wear leveling ("Yes" in step S81), the CPU 31 selects the erase block as a target of the wear leveling. Specifically, the CPU 31 selects, as the target of the wear leveling, the erase block having a small number of writes (for example, having a minimum number of writes) in which the video data estimated to have a low access frequency but actually having a high access frequency is recorded (step S82).

Subsequently, the CPU 31 changes the access frequency of the video data recorded in the erase block selected in step S82 from "low" to "high" (step S83). This makes it possible to correct the erroneous estimation of the access frequency and more appropriately manage the video data.

Thereafter, the CPU 31 transfers the video data recorded in the erase block selected in step S82 to an erase block (a fifth recording area) having a larger number of writes than the selected erase block (step S84). As the erase block that is a transfer destination of the video data, an erase block having a relatively large number of writes is selected among the plurality of erase blocks included in the first storage 5a. For example, the erase block (in the example illustrated in Fig. 13, the erase block "4") having a maximum number of writes can be selected as the erase block that is the transfer destination.

As described above, by transferring the video data erroneously estimated to have a low access frequency and recorded in the erase block having a small number of writes to the erase block having a large number of writes, it is possible to suppress an increase in the difference in the number of writes between the plurality of erase blocks included in the first storage 5a and to suppress the occurrence of further wear leveling.

### [5. Other exemplary embodiments]

Although one exemplary embodiment of the present invention has been described above, the present invention is not limited to the above exemplary embodiment, and various modifications can be made without departing from the gist of the invention. In particular, a plurality of exemplary embodiments and modifications described in the present specification can be arbitrarily combined as necessary.
(A) Orders of processings and contents of the processings in the flowchart described above can be appropriately changed without departing from the gist of the present invention. In addition, subjects (the information processing device 1, the storage control device 3, the first storage 5a to the third storage 5c) that respectively execute the processings can be appropriately changed without departing from the gist of the present invention.
(B) For example, it may be possible to set such that some of a plurality of the video data recording operations described above is executed and the rest is not executed in the video recording system 100 by an operation by the user.
(C) The configuration and/or function of the storage control device 3 described above may be included in the information processing device 1. That is, the information processing device 1 may have storage interfaces for connecting the plurality of storages (the first storage 5a to the third storage 5c). In addition, the control unit of the information processing device 1 may also execute functions (that is, the video data recording operations described above) of the storage control device 3.
(D) The first storage interface 37a, the second storage interface 37b, and the third storage interface 37c may be formed by logically separating one physical interface. In addition, the storage interface and the storage may be connected via a switch using a network such as Ethernet (registered trademark) or FiberChannel instead of one-to-one connection.
(E) In the above embodiment, the information processing device 1 analyzes the video data and determines the usage status (the importance, the access frequency, and the data transfer time) thereof. However, the present disclosure is not limited thereto, and the storage control device 3 may analyze the video data and determine the usage status thereof.

### [6. Features of the present disclosure]

(1) The recording method for recording the video data according to the present disclosure is a method for recording the video data in a plurality of recording areas having different performances. The recording method includes the following step.
   ⊙ a usage status acquisition step of acquiring a usage status of the video data obtained by analyzing the video data.
   ⊙ a recording area determining step of determining in which recording area of the plurality of recording areas the video data is to be recorded, based on the usage status.
   In the above recording method for recording the video data, the video data is analyzed to determine the usage status of the video data, and it is determined in which recording area of the plurality of recording areas the video data is to be recorded, based on the determination result (that is, the usage status of the video data). This makes it possible to record the video data in an appropriate recording area according to the usage status.
(2) In the recording method according to the above (1), the plurality of recording areas may include a first recording area and a second recording area having lower performance than the first recording area. In this case, the usage status acquisition step may include a step of analyzing contents of the video data and acquiring importance of the video data as the usage status. In addition, the recording area determining step may include a step of determining to record video data with high importance in the first recording area and to record video data with low importance in the second recording area. This makes it possible to record the video data in an appropriate storage according to the importance.
(3) In the recording method according to the above (1) or (2), the usage status acquisition step may include a step of acquiring a data transfer time as the usage status. The data transfer time is a time at which the video data is to be transferred from a recording area in which the video data is currently recorded to another recording area. In this case, the recording area determining step may include a step of transferring the video data from the recording area in which the video data is currently recorded to another recording area when a current time coincides with the data transfer time. This makes it possible to record the video data in an appropriate storage according to the usage status of the video data.
(4) In the recording method according to any one of the above (1) to (3), the plurality of recording areas may include a first recording area and a second recording area having lower performance than the first recording area. In this case, the usage status acquisition step may generate a video file from a plurality of video data, and acquire importance of the video file as the usage status of the video data. Further, the recording area determining step may include a step of recording the video file in the first recording area, and a step of determining whether to transfer the video file recorded in the first recording area to the second recording area based on the importance of the video file. This makes it possible to collectively record the plurality of video data in an appropriate storage according to the importance.
(5) In the recording method according to any one of the above (1) to (4), the plurality of recording areas may include a third recording area having a small number of writes and a fourth recording area having a large number of writes. In this case, the usage status acquisition step may include a step of determining an access frequency of the video data as the usage status. Further, the recording area determining step may include a step of determining to record the video data having a low access frequency in the third recording area and to record the video data having a high access frequency in the fourth recording area. Thus, the difference in the number of writes between the plurality of recording areas can be reduced, so that the occurrence of the wear leveling can be suppressed.
(6) In the recording method according to the above (5), the recording area determining step may include a step of transferring the video data from the third recording area to a fifth recording area having a large number of writes when the access frequency of the video data, that has been determined that the access frequency is low and recorded in the third recording area, is high. Thus, the video data erroneously estimated to have a high access frequency and recorded in the recording area (third recording area) having a small number of writes can be transferred to the recording area (fifth recording area) having a large number of writes. As a result, the increase in the difference in the number of writes between the plurality of recording areas can be suppressed, and the occurrence of the wear leveling can be suppressed.
(7) In the recording method according to the above (6), the recording area determining step may include a step of changing the access frequency of the video data transferred from the third recording area to the fifth recording area to be high. This makes it possible to correct the erroneous estimation of the access frequency and more appropriately manage the video data.
(8) In the recording method according to any one of the above (1) to (7), the usage status acquisition step may include a step of associating the usage status with the video data as metadata. Thus, since it is not necessary to individually manage the video data and the usage status, it is easy to manage the video data.
(9) A storage control device according to the present disclosure includes: an interface communicating with a plurality of recording areas capable of recording video data and each having different performance; and a control unit configured to control recording of the video data in the plurality of recording areas. In the storage control device, the control unit determines in which recording area of the plurality of recording areas the video data is to be recorded, based on a usage status of the video data determined by analyzing the video data.
   In the above storage control device, the video data is analyzed to determine the usage status of the video data, and it is determined in which recording area of the plurality of recording areas the video data is to be recorded, based on the determination result (that is, the usage status of the video data). This makes it possible to record the video data in an appropriate recording area according to the usage status.
(10) Another information processing device according to the present disclosure includes: an interface communicating with a plurality of recording areas capable of recording video data and each having different performance; and a control unit configured to control recording of the video data in the plurality of recording areas. In this information processing device, the control unit determines in which recording area of the plurality of recording areas the video data is to be recorded based on the usage status of the video data determined by analyzing the video data.
   In the above information processing device, the video data is analyzed to determine the usage status of the video data, and it is determined in which recording area of the plurality of recording areas the video data is to be recorded, based on the determination result (that is, the usage status of the video data). This makes it possible to record the video data in an appropriate recording area according to the usage status.
(11) A video recording system according to the present disclosure includes an information processing device, a plurality of recording areas, and a storage control device. The information processing device executes processing related to video data. The plurality of recording areas can record the video data. Further, the plurality of recording areas respectively have different performances. The storage control device controls recording of the video data in the plurality of recording areas. In this system, the information processing device analyzes the video data to determine a usage status of the video data. The storage control device determines in which recording area of the plurality of recording areas the video data is to be recorded, based on the usage status of the video data.

In the above video recording system, the video data is analyzed to determine the usage status of the video data, and it is determined in which recording area of the plurality of recording areas the video data is to be recorded, based on the determination result (that is, the usage status of the video data). This makes it possible to record the video data in an appropriate recording area according to the usage status.

### INDUSTRIAL APPLICABILITY

The present disclosure can be widely applied to a video recording system for recording the video data in a predetermined recording area, a storage control device, an information processing device, and a recording method for recording the video data in a predetermined recording area.

### REFERENCE MARKS IN THE DRAWINGS

100: video recording system
1: information processing device
11: CPU
13: RAM
15: storage device
17: interface
19: network interface
2: video output device
3: storage control device
31: CPU
33: RAM
35: storage device
37a: first storage interface
37b: second storage interface
37c: third storage interface
39: network interface
4: operating device
5a: first storage
5b: second storage
5c: third storage
T1: data transfer time setting table
C1: data transfer time setting column
C2: transfer target data name setting column
C3: transfer source storage setting column
C4: transfer destination storage setting column

## Claims

1. A recording method for recording video data in a plurality of recording areas having different performances, the method comprising:
a usage status acquisition step of acquiring a usage status of the video data, the usage status being obtained by analyzing the video data; and
a recording area determining step of determining in which recording area of the plurality of recording areas the video data is to be recorded, based on the usage status.

2. The recording method according to claim 1, wherein
the plurality of recording areas includes a first recording area and a second recording area having lower performance than performance of the first recording area,
the usage status acquisition step includes a step of analyzing contents of the video data and acquiring importance of the video data as the usage status, and
the recording area determining step includes a step of determining to record the video data in the first recording area when the importance of the video data is high and record the video data in the second recording area when the importance of the video data is low.

3. The recording method according to claim 1, wherein
the usage status acquisition step includes a step of acquiring, as the usage status, a data transfer time at which the video data is to be transferred from a recording area in which the video data is currently recorded to another recording area among the plurality of recording areas, and
the recording area determining step includes a step of transferring the video data from the recording area in which the video data is currently recorded to the other recording area when a current time coincides with the data transfer time.

4. The recording method according to claim 1, wherein
the plurality of recording areas includes a first recording area and a second recording area having lower performance than performance of the first recording area,
the usage status acquisition step includes a step of generating a video file from a plurality of video data and acquiring importance of the video file as the usage status, and
the recording area determining step includes:
a step of recording the video file in the first recording area; and
a step of determining whether to transfer the video file recorded in the first recording area to the second recording area based on the importance of the video file.

5. The recording method according to claim 1, wherein
the plurality of recording areas include a third recording area having a small number of writes and a fourth recording area having a large number of writes,
the usage status acquisition step includes a step of determining an access frequency of the video data as the usage status, and
the recording area determining step includes a step of determining to record the video data in the third recording area when the access frequency of the video data is low and record the video data in the fourth recording area when the access frequency of the video data is high.

6. The recording method according to claim 5, wherein the recording area determining step includes a step of transferring the video data from the third recording area to a fifth recording area included in the plurality of recording areas and having a large number of writes when the access frequency of the video data, that has been determined that the access frequency is low and recorded in the third recording area, is high.

7. The recording method according to claim 6, wherein the recording area determining step includes a step of changing the access frequency of the video data transferred from the third recording area to the fifth recording area to be high.

8. The recording method according to any one of claims 1 to 7, wherein the usage status acquisition step includes a step of associating the usage status with the video data as metadata.

9. A storage control device comprising:
an interface communicating with a plurality of recording areas capable of recording video data and each having different performance; and
a control unit configured to control recording of the video data in the plurality of recording areas,
wherein the control unit determines in which recording area of the plurality of recording areas the video data is to be recorded, based on a usage status of the video data determined by analyzing the video data.

10. An information processing device comprising:
an interface communicating with a plurality of recording areas capable of recording video data and each having different performance; and
a control unit configured to control recording of the video data in the plurality of recording areas,
wherein the control unit determines a usage status of the video data by analyzing the video data, and determines in which recording area of the plurality of recording areas the video data is to be recorded, based on the usage status.

11. A video recording system comprising:
an information processing device configured to execute processing related to video data;
a plurality of recording areas capable of recording the video data and each having different performance; and
a storage control device configured to control recording of the video data in the plurality of recording areas,
wherein the information processing device analyzes the video data to determine a usage status of the video data, and
the storage control device determines in which recording area of the plurality of recording areas the video data is to be recorded, based on the usage status.
